# EUROPEAN PATENT SPECIFICATION

(11) **EP 4 172 967 B1**
(45) Date of publication and mention of the grant of the patent: **14.08.2024**
(21) Application number: 21733135.4
(22) Date of filing: 18.06.2021
(51) Int. Cl.: G08B 13/24, G08B 21/04

(54) **CHANNEL STATE INFORMATION FORWARDING IN PASSIVE WIRELESS SENSING NETWORK**
KANALZUSTANDSINFORMATIONSWEITERLEITUNG IN EINEM PASSIVEN DRAHTLOSEN ERFASSUNGSNETZWERK
TRANSFERT D'INFORMATIONS D'ÉTAT DE CANAL DANS UN RÉSEAU DE DÉTECTION SANS FIL PASSIF

(30) Priority: 25.06.2020 US 202063043954 P; 30.06.2020 EP 20183101
(43) Date of publication of application: 03.05.2023
(73) Proprietor: Signify Holding B.V., 5656 AE Eindhoven (NL)
(72) Inventor: KRAJNC, Hugo, José, 5656 AE Eindhoven (NL); DEIXLER, Peter, 5656 AE Eindhoven (NL)
(74) Representative: Verweij, Petronella Daniëlle
(86) International application number: PCT/EP2021/066666
(87) International publication number: WO 2021/259805

(56) References cited:
- WO-A1-2016/066820
- US-A1- 2012 146 788
- US-B1- 10 109 167
- US-B1- 10 498 467
- US-B1- 10 567 914

## Description

### FIELD OF THE INVENTION

The invention relates to a method, device and system for performing passive wireless sensing in a wireless network based on detecting changes in received radio frequency signals and in particular to performing such sensing based on analyzing channel state information.

### BACKGROUND OF THE INVENTION

A wireless network, such as a Wi-Fi network, consists of several nodes communicating with each other using radiofrequency, RF, signals. The RF signals that are exchanged between nodes can be impacted due to the absorption, reflection and scattering of such RF signals by objects such as walls, doors, as well as a human or animal body, when present. In recent years Wi-Fi devices have started to use Channel State Information, CSI, which represents how wireless signals propagate in a wireless channel between a transmitter and receiver at certain carrier frequencies along multiple spatial paths. CSI hence captures the wireless characteristics of the nearby environment, as CSI's amplitude and phase are impacted by multi-path effects including amplitude attenuation and phase shift of the radio signals.

A time-series of multiple CSI measurements captures how wireless signals travel through a space in time, frequency, and spatial domains; hence, the signals may be analyzed to enable a wide range of different wireless sensing applications. For example, CSI amplitude variations in the time domain have different patterns for different humans, activities, gestures, etc., which can be used for presence detection, motion detection, activity recognition, etc.

Analyzing RF signals can require powerful hardware, for example in terms of computing power and/or memory. This is especially the case when the analysis is performed based on CSI, which can be voluminous, for example when a link has many subcarrier frequencies. In fact, for a modem Wi-Fi network with Multiple-Input Multiple-Output Orthogonal Frequency-Division Multiplexing, MIMO-OFDM, the CSI measurement provides a three-dimensional matrix of complex values representing the amplitude attenuation and phase shift over time.

As multiple nodes are needed, increasing the number of nodes in such a wireless network to improve the coverage of an area that is to be monitored and allow for improved sensing, can make such a system very costly.

Examples for determining a location of motion of an object based on wireless signals are provided in US10567914 and US10498467.

### SUMMARY OF THE INVENTION

In a first aspect, a method is provided for performing sensing in a wireless network accrding to claim 1.

The wireless network comprises at least one node of a first type and a plurality of nodes of a second type. The at least one node of the first type is arranged for performing analysis of channel state information, CSI, related to wireless signals transmitted in the wireless network. This node therefore requires certain hardware, e.g. an amount of memory and/or an amount of computing power, to allow it to be able to perform this analysis. The nodes of the second type are different from the node of the first type. The nodes of the second type are not required to be able to perform analysis of CSI, although this does not exclude such nodes having powerful hardware requirements, for example for performing other functions.

The method comprises transmitting one or more wireless signals between the plurality of nodes of the second type. These signals may be transmitted for the sole purpose of performing the analysis, however, these signals may also comprise data transmissions between nodes which are performed for other purposes. At least one node of the plurality of nodes of the second type determines CSI, related to the one or more wireless signals. The at least one node of the plurality of nodes of the second type then transmits at least part of the determined CSI to a node of the at least one node of the first type. The node of the at least one node of the first type then receives the at least part of the determined CSI and analyzes the received at least part of the CSI. Based on said analysis a sensing value is determined.

The nodes of the second type are thus able to determine CSI (or, in other words, extract CSI) and transmit (or, in other words, forward) at least part of the CSI, and the at least one node of the first type is able to process this received at least part of the CSI. This allows CSI related to signals transmitted between the plurality of nodes of the second type to be used in performing sensing, without requiring that these nodes of the second type are (capable of) performing said analysis themselves. As a result, the nodes of the second type may be used to improve the coverage and/or the quality of the sensing performed in the wireless network, while reducing the hardware requirements compared to utilizing only nodes of the first type, which may be more costly. In other words, a system may comprise a node A of the first type situated in an area A and two nodes B1 and B2 of the second type situated in area B, with area A and B not overlapping. The prior art shows that node A may determine CSI of a first signal sent from node B1 to node A and further, optionally, determine CSI of a second signal sent from node B2 to node A. The CSI related to the first and optionally second signal may be analyzed by node A to determine a sensing value, such as presence. Thus, a sensing value is determined based on CSI related to signals sent between the node(s) in area B to the node in area A; the sensing is thus performed for the combination of at least part of area A and at least part of area B. In this example, if presence sensing is performed, when a person moves in area B this may be detected (assuming the first or second signal is influenced by this person moving in area B), however, if a person moves in area A this would also trigger such detection (again assuming the first or second signal is influenced by this person moving in area A). Further, the coverage of area B may not be optimal.

What the present invention provides is that, continuing the example, alternative or additional to the first and optional second signals being transmitted as described above, one or more third signals are transmitted between the nodes in area B, for example from B1 to B2, and that the CSI of these one or more third signals are determined, in this example by B2 based on the signal it has received from B1. The determined CSI (or part of it) related to these one or more third signals is then sent from the node that has determined it, in this example node B2, to node A. Then, node A can process the (part of the) CSI it has received. This CSI now relates to the signal(s) sent in area B between the nodes in area B only. In this example, the CSI analyzed by node A relates to a signal sent from node B 1 to node B2. Thus, presence may be detected in area B instead of the combination of area A and B, and further the coverage of sensing in area B may be improved.

The nodes of the second type may be arranged for compressing data, e.g. the CSI, to take up smaller payloads during transmission, for filtering or removing noise over multiple previously determined CSI and/or extracting specific minor features over multiple previously determined CSI. For example, the minor features may indicate a maximum/minimum amplitude/deviation/phase shift; if these maximum/minimum values are not significantly different from previous ones received by the node of the second type, this node could simply avoid processing the CSI and use its computing resources for other purposes. The level and/or type of pre-processing performed at nodes of the second type may be determined based on its computational capabilities, its battery power level, power consumption, its usage of memory, any further functions it is performing, etc., as well as on the computational capabilities of the at least one node of the first type. Further the type of sensing being performed (e.g. requiring a maximum detection latency), the state of the wireless network, etc. may determine the degree to which pre-processing is performed.

According to the invention the method further comprises transmitting a further one or more wireless signals between the node of the at least one node of the first type and one or more of the plurality of nodes of the second type. The node of the at least one node of the first type determines further CSI, related to said further one or more wireless signals and analyzes said CSI. The step of determining the sensing value is further based on said analysis of the further CSI.

This allows the sensing to be performed based on both the CSI that is extracted in relation to the wireless signals transmitted between the plurality of nodes of the second type, as well as by the wireless signals transmitted between the at least one node of the first type and one or more nodes of the second type, thereby further improving coverage of quality of the sensing performed. The sensing value may relate to one characteristic, such as detecting presence of a person, yet may also relate to multiple characteristics, such as detecting presence of a person and detecting presence of an animal. Each such characteristic may be determined based on the CSI related to the signal transmitted between the plurality of nodes of the second type, the wireless signals transmitted between the at least one node of the first type and one or more nodes of the second type, or both. For example, based on the CSI related to the wireless signals transmitted between the at least one node of the first type and one or more nodes of the second type, the state of a home may be determined as occupied or unoccupied, while the CSI related to the signal transmitted between the plurality of nodes of the second type is used to determine the state of a single room (or multiple rooms, together or individually) as occupied or unoccupied.

According to the invention, the further one or more wireless signals comprise the transmission of the at least part of the determined CSI. Thus, the at least one node of the first type receives the at least part of the CSI and further determines the further CSI based on this transmission of the at least part of the CSI. This allows the same messages that carry the at least part of the determined CSI, to be used for determining the further CSI, thereby making more efficient use of the wireless network and/or other resources.

In a further embodiment, the sensing value is indicative of movement of an object in a sensing zone, said sensing zone defined by at least the position of multiple of the plurality of nodes of the second type. The plurality of nodes of the second type may be, for example, located in a room of a building, such as a home. The sensing zone may then be determined as that room (or part of it). This is beneficial for movement detection, including presence detection, and may thus detect movement or presence of a person, an animal (such as a pet) or another object.

In another embodiment, the determining CSI, related to the one or more wireless signals, by the at least one node of the plurality of nodes of the second type comprises extracting multiple time-series values from a communication stack of the at least one node of the plurality of nodes of the second type. The determining CSI, related to the one or more wireless signals, by the at least one node of the plurality of nodes of the second type may further comprise, for example, selecting a frequency or periodicity at which the CSI is extracted, or what CSI is extracted (e.g. which sub frequencies/carriers).

Optionally, the determining CSI, related to said one or more wireless signals, by the at least one node of the plurality of nodes of the second type further comprises selecting the at least part of the CSI to be transmitted from the determined CSI. In such case the selecting the at least part of the CSI to be transmitted from the determined CSI may be performed based on at least one of: a state of the wireless network, the sensing value to be determined, the capabilities of the node transmitting and/or the capabilities of the node receiving the CSI, and the size, in terms of processing, memory or network requirements, of the CSI that is extracted. This may be advantageously used to avoid using too many resources, for example to avoid flooding the wireless network with messages carrying CSI data.

In another embodiment, the analysis of the received at least part of the CSI performed by the node of the at least one node of the first type is different from the analysis of the further CSI performed by the node of the at least one node of the first type. This is beneficial if, for example, the area covered by the signals transmitted between the plurality of nodes of the second type is different (e.g. a specific room or floor of a building) from the area covered by the further wireless signals (e.g. general perimeter of the building, such as a home). Alternatively or additionally, it may be that the value which is sensed is different (e.g. detecting presence of a person vs. performing breathing detection).

In yet a further embodiment, the node of the at least one node of the first type controls which at least one node of the plurality of nodes of the second type determines CSI related to said wireless signal. Advantageously, this allows the node of the first type to orchestrate the CSI determination, for example by changing over time which node of the second type performs the CSI determination to perform sensing in specific areas (e.g. periodically). This is especially beneficial if there is a need to limit the amount of traffic in the wireless network and sensing may be limited to particular areas.

In yet another embodiment, the node of the at least one node of the first type controls a characteristic of the transmitting at least part of the determined CSI by the at least one node of the plurality of nodes of the second type to the node of the at least one node of the first type. The characteristic may comprise one or more of: how often the at least part of the CSI is transmitted, what part of the CSI is transmitted, when the CSI is transmitted and how the CSI is transmitted (e.g. which format, together with other data).

In an especially advantageous embodiment, the wireless network comprises multiple nodes of the first type, and the method further comprises: selecting one or more of the multiple nodes of the first type to which the at least part of the determined CSI is transmitted, such that the selected one or more of the multiple nodes of the first type receive the at least part of the determined CSI and analyze the received at least part of the CSI. This allows to balance which of the nodes of the first type performs the analysis, and may be used in particular when each of the nodes of the first type performs a different type of analysis (e.g. for determining a different characteristic of the sensing value).

According to a second aspect, a computer program product is provided. The computer program product comprises instructions which, when the program is executed by a processor, cause the processor to carry out the method according to the first aspect, and any of its embodiments.

According to a third aspect, a system is provided as claimed in claim 12, the system comprising a wireless network, the wireless network comprising at least one node of a first type arranged for performing analysis of channel state information related to wireless signals transmitted in the wireless network, and a plurality of nodes of a second type, different from the first type, wherein each of the plurality of nodes of the second type are arranged for:transmitting one or more wireless signals between the plurality of nodes of the second type determining, by at least one node of the plurality of nodes of the second type, channel state information, related to the one or more wireless signals transmitted between the plurality of nodes of the second type; and transmitting one or more further wireless signals, by the at least one node of the plurality of nodes of the second type to a node of the at least one node of the first type, comprising at least part of the determined channel state information related to the one or more wireless signals transmitted between the plurality of nodes of the second type; wherein each of the at least one node of a first type are further arranged for:receiving the one or more further wireless signals comprising the at least part of the determined channel state information related to the one or more wireless signals transmitted between the plurality of nodes of the second type determining further channel state information related to the one or more further wireless signals transmitted between the at least one node of the plurality of nodes of the second type to the node of the at least one node of the first type and analyzing both the received at least part of the channel state information related to the one or more wireless signals transmitted between the plurality of nodes of the second type and the further channel state information, and determining based on said analysis a sensing value.

### BRIEF DESCRIPTION OF THE DRAWINGS

These and other aspects of the invention are apparent from and will be further elucidated, by way of example, with reference to the drawings, in which:
Fig. 1 shows a first system according to the prior art, with limited sensing coverage;
Fig. 2 shows a second system according to the prior art, which requires the use of many expensive nodes;
Fig. 3 shows a system for performing sensing in a wireless network according to the first aspect;
Fig. 4 illustrates a characteristic of the system illustrated in the Fig. 3;
Fig. 5 illustrates an embodiment of a system according to the first aspect, comprising multiple nodes of the first type;
Fig. 6 illustrates a characteristic of a system comprising many nodes of the second type;
Fig. 7 illustrates an embodiment of the system according to the first aspect, addressing the characteristic illustrated in Fig. 6; and
Fig. 8 is a block diagram of method for performing sensing in a wireless network.

Corresponding elements in the drawings are denoted by the same reference numeral.

### DETAILED DESCRIPTION OF THE EMBODIMENTS

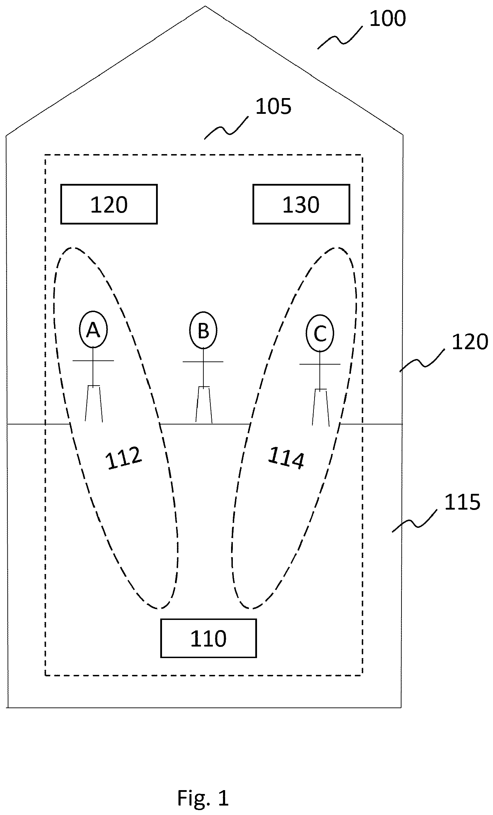

Fig. 1 shows a building, in this example a house 100, comprising a first area 115, such as a ground floor, and a second area 120, such as a floor above the ground floor. In this house 100, a first wireless network sensing system according to the prior art 105 is installed. The system 105 comprises a node of a first type 110 and two nodes of a second type 120, 130. The node of the first type 110 is able to process channel state information, CSI, related to wireless links within the wireless network sensing system 110 and based on this analysis determine whether a person is present. The nodes 120, 130 of the second type do not analyze CSI, as they may not be able to due to, for example, limitations in memory or processing power or other limitations. Nodes of the second type may be relatively cheaper than nodes of the first type, due to the reduced requirements in view of these not needing to be able to perform analysis of CSI.

The benefit of this first system according to the prior art 105 is that it is relatively cheap, as only a single node of the first type 110 is required. However, the signals being sent within the system 105 which may be used for performing sensing based on analyzing CSI are limited to a first signal 112 and a second signal 114 related to a link between the node of the first type 110 and, respectively, a first node of the second type 120 and a second node of the second type 130. As a result, a first person A and a third person C may be detected in the home 100, based on analyzing the CSI, however a second person B may not be detected as this second person does not impact the links 112, 114 sufficiently.

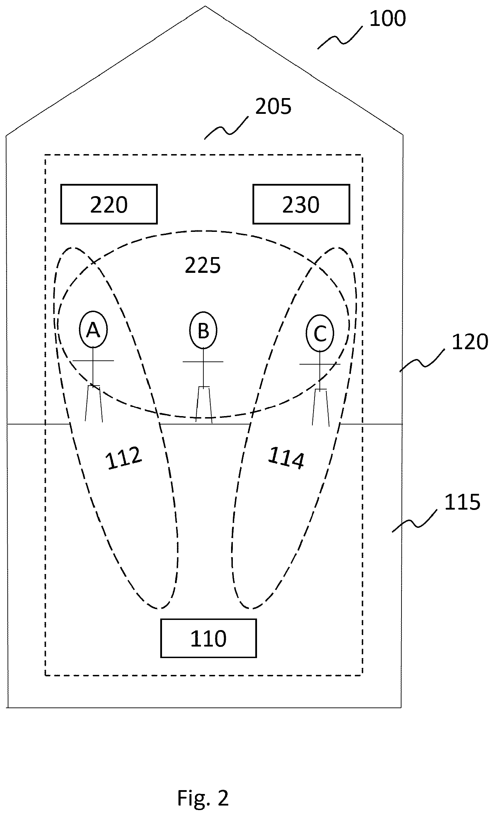

Fig. 2 shows a second wireless network sensing system according to the prior art 205. In this system 205, there are three nodes of the first type 110, 220, 230. Each of these nodes can analyze CSI related to links between each of the nodes. As there is now a third signal 225 related to a link between a second node of the first type 220 and a third node of the first type 230, also the second person B can be detected as, other than in the system 105 of Fig. 1, there now is a link 225 which is impacted.

The benefit of this second system according to the prior art 205 is that it provides greater coverage for performing sensing in the house 100. However, it is relatively expensive as it requires that there are more nodes of the first type when compared to the first wireless network sensing system according to the prior art 105 of Fig. 1.

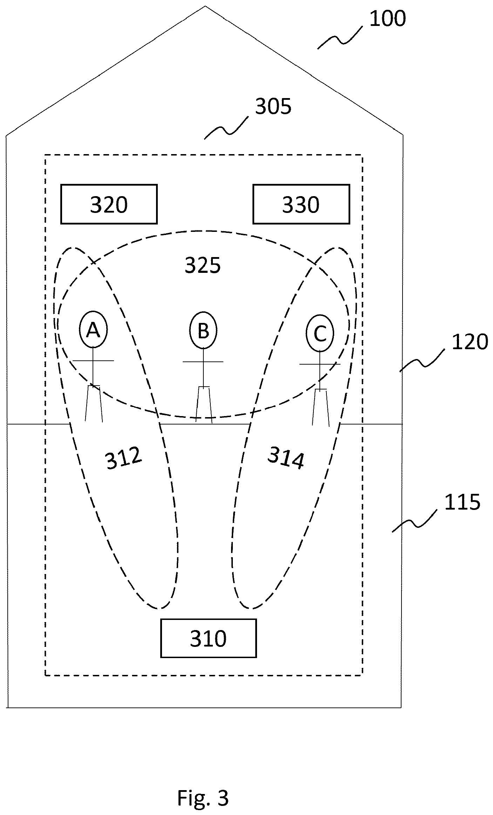

In Fig. 3 a system 305 according to an embodiment of the first aspect is shown. This system 305 comprises a first node of the first type 310 and two nodes of the second type 320, 330. Similar to the system shown in Fig. 1, the first node of the first type analyzes CSI related to each of the links 312, 314 this node has with the first and second node of the second type 320, 330. Although the nodes of the second type are not capable of analyzing CSI related to a link 325 between them, there is a signal transmitted between the first and second nodes of the second type 320, 330. A determination of the CSI of this signal 325 may be made by one of the nodes of the second type 220, 230.

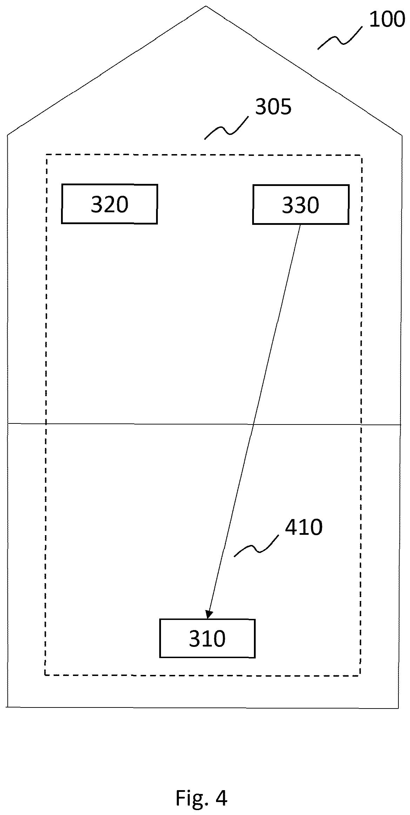

As shown in Fig. 4, the CSI related to the one or more wireless signals transmitted between the nodes of the second type 320, 330 is extracted and at least part of the CSI is transmitted by one of the nodes of the second type 330 over a link 410 to the node of the first type 310. Whether one or both nodes of the second type transmit CSI data can be determined in a variety of manners, for example each node of the second type may autonomously determine whether to transmit extracted CSI to the node of the first type 310, or the nodes of the second type 320, 330 determine this together e.g. in a master/slave configuration, or the node of the first type 110 may poll or instruct a node of the second type 220, 230 to transmit at least part of the extracted CSI.

The node of the first type 310 then analyses the received at least part of the CSI, which relates to the wireless signals transmitted between the nodes of the second type 320, 330. Thus, the system 305 is able to, for example, detect all three persons A, B, C shown in Fig. 3, while only requiring at least one node of the first type. This provides the lower cost benefits of the system 105 shown in Fig.1, and the greater coverage benefits of the system 205 shown in Fig. 2.

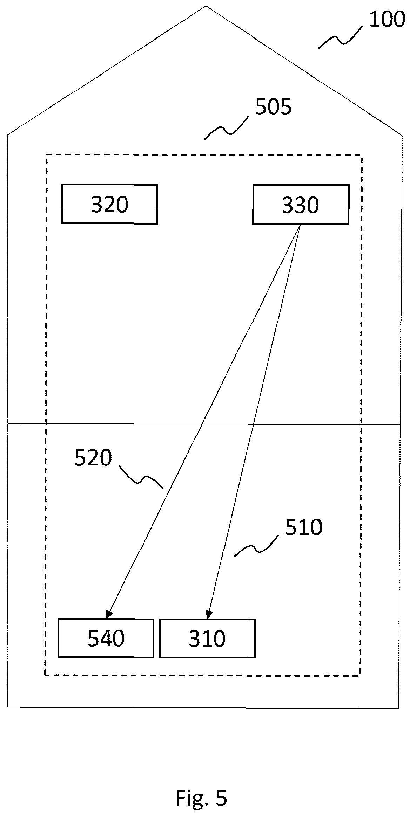

Although only a single node of the first type is needed in the system 305 shown in Fig. 4, there may be, as is illustrated in the system 505 of Fig. 5, multiple nodes of the first type 310, 540. One of the nodes of the second type 330 transmits at least part of the CSI to either one or both nodes of the first type 310, 540. To which node(s) of the first type at least part of the extracted CSI is transmitted, may be determined autonomously by the nodes of the second type, or it may be predetermined, user configured, set by the nodes of the first type. etc. Transmitting at least part of the determined CSI to only one node of the first type, lessens the bandwidth needed in the wireless network for transmitting this data. By transmitting at least part of the determined CSI to multiple nodes of the first type, each such node of the first type may track changes in the determined CSI over time, or each such node may use a different algorithm for performing sensing e.g. a first node of the first type may determine a value indicative of a person moving around an area, based on the analysis of the extracted CSI, whereas a second node of the first type may determine a value indicative of a person breathing; further these determined values may together be used to determine a value indicative of presence of a person.

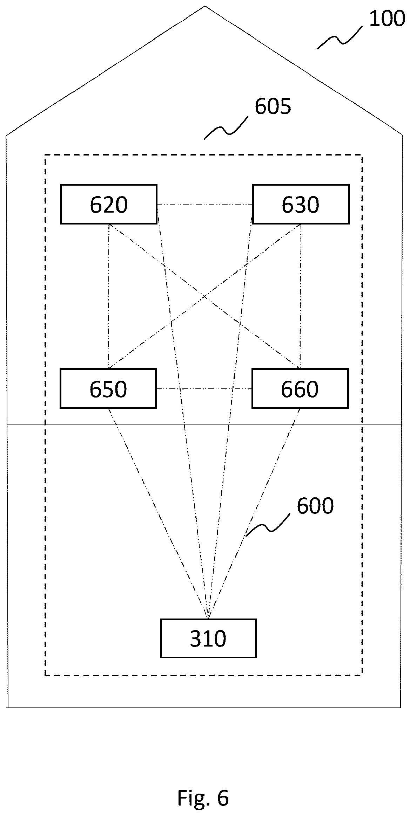

The examples provided in Fig. 3-5 show only two nodes of the second type. As follows from the example provided in Fig. 5, there may be more than one node of the first type. In fact, there may be any number of nodes of the first type, as long as there is at least one. There may also be any number of nodes of the second type, as long as there are multiple i.e. at least two nodes of the second type. Shown in Fig. 6 is a system 605 comprising four nodes of the second type 620, 630, 650, 660. In this system 605 each node of the second type creates a link with each of the other nodes of the second type, and when further the node of the first type 310 creates a link with each of the nodes of the second type 620, 630, 650, 660. This creates a large number of links 60, which may allow e.g. for extending the coverage area in which sensing is performed, however which may also be detrimental to improved sensing, such as when the wireless network becomes congested, when lag increases or messages are dropped.

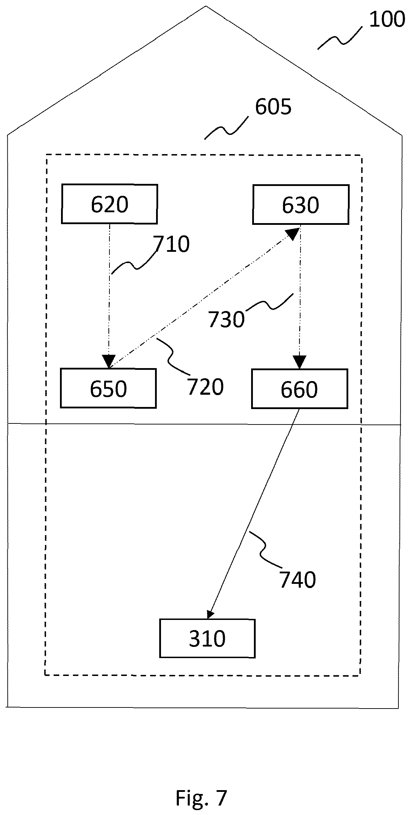

In Fig. 7 the system 605 of Fig. 6 is shown again, however here the number of links between devices used for sensing is limited. In this example, three distinct wireless signals 710, 720, 730 are each transmitted between two nodes of the second type 620, 630, 650, 660. This allows, although optional, to send a message from a first node 620 to a second node 650, for the second node to determine the CSI related to its link with the first node and send at least part of this CSI as a message 720 to the third node 630. The third node 630 may then determine the CSI related to its link with the second node 650 and transmit at least part of this CSI as well as the CSI data received from the second node 650 related to its link 710 with the first node 620 to the fourth node 660. Finally, the fourth node 660 may again determine the CSI related to its link 730 with the third node and transmit at least part of this CSI it has determined to the node of the first type 740. The fourth node 660 will further send the CSI data it has received from the third node, which includes the CSI data which the third node has received from the second node, to the node of the first type. The node of the first type 310 may then analyze the CSI data related to each of the three links 710, 720, 730 discussed above. Further, the node of the first type 310 may extract CSI data related to the link 740 it has with the fourth node of the second type 660 and analyze this.

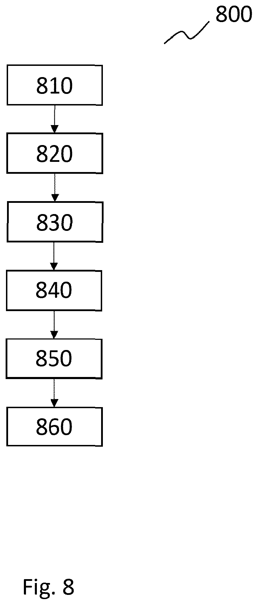

In Fig. 8 a block diagram is shown which shows an example of a method 800 for performing sensing in a wireless network. The wireless network comprises at least one node of the first type arranged for performing analysis on CSI related to wireless signals transmitted in the wireless network and a plurality of nodes of the second type, different from the first type. The method comprises:
- transmitting 810 one or more wireless signals between the plurality of nodes of the second type,
- determining 820 CSI, related to the one or more wireless signals, by at least one node of the plurality of nodes of the second type,
- transmitting 830 at least part of the determined CSI, by the at least one node of the plurality of nodes of the second type to a node of the at least one node of the first type;
- receiving 840 the at least part of the determined CSI by the node of the at least one node of the first type; and
- analyzing 850, by the node of the at least one node of the first type, the received at least part of the CSI and, based on said analysis, determining 860 a sensing value.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on a processor.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method for performing sensing in a wireless network, the wireless network comprising at least one node of a first type (310) arranged for performing analysis of channel state information related to wireless signals transmitted in the wireless network, the wireless network further comprising a plurality of nodes of a second type (320,330), type, different from the first type, the method comprising:
transmitting one or more wireless signals between the plurality of nodes of the second type;
determining, by at least one node of the plurality of nodes of the second type, channel state information, related to the one or more wireless signals transmitted between the plurality of nodes of the second type;
transmitting one or more further wireless signals, by the at least one node of the plurality of nodes of the second type to a node of the at least one node of the first type, comprising at least part of the determined channel state information related to the one or more wireless signals transmitted between the plurality of nodes of the second type;
receiving the one or more further wireless signals, by the node of the at least one node of the first type, comprising the at least part of the determined channel state information related to the one or more wireless signals transmitted between the plurality of nodes of the second type;
determining, by the node of the at least one node of the first type, further channel state information, related to the one or more further wireless signals transmitted between the at least one node of the plurality of nodes of the second type to the node of the at least one node of the first type;
analyzing, by the node of the at least one node of the first type, both:
- the received at least part of the channel state information related to the one or more wireless signals transmitted between the plurality of nodes of the second type and,
- the determined further channel state information related to the one or more further wireless signals transmitted between the at least one node of the plurality of nodes of the second type to the node of the at least one node of the first type;
and determining a sensing value based on said analysis.

2. The method according to any one of the preceding claims, wherein the sensing value is indicative of movement of an object in a sensing zone, said sensing zone defined by at least the position of multiple of the plurality of nodes of the second type.

3. The method according to any one of the preceding claims, wherein the determining channel state information, related to the one or more wireless signals, by the at least one node of the plurality of nodes of the second type comprises extracting multiple time-series values from a communication stack of the at least one node of the plurality of nodes of the second type.

4. The method according to claim 3, wherein the determining channel state information, related to the one or more wireless signals, by the at least one node of the plurality of nodes of the second type further comprises selecting a frequency or periodicity at which the channel state information is extracted.

5. The method according to claim 3 or 4, wherein the determining channel state information, related to said one or more wireless signals, by the at least one node of the plurality of nodes of the second type further comprises selecting the at least part of the channel state information to be transmitted from the determined channel state information.

6. The method according to claim 5, wherein the selecting the at least part of the channel state information to be transmitted from the determined channel state information is performed based on at least one of: a state of the wireless network, the sensing value to be determined, and amount of the channel state information that is extracted.

7. The method according to any one of the preceding claims, wherein the analysis of the received at least part of the channel state information performed by the node of the at least one node of the first type is different from the analysis of the further channel state information performed by the node of the at least one node of the first type.

8. The method according to any one of the preceding claims wherein the node of the at least one node of the first type controls which at least one node of the plurality of nodes of the second type determines channel state information related to said wireless signal.

9. The method according to any one of the preceding claims, wherein the node of the at least one node of the first type controls a characteristic of the transmitting at least part of the determined channel state information by the at least one node of the plurality of nodes of the second type to the node of the at least one node of the first type.

10. The method according to claim 1, wherein the wireless network comprises multiple nodes of the first type, and wherein the method further comprises:
selecting one or more of the multiple nodes of the first type to which the at least part of the determined channel state information is transmitted, such that the selected one or more of the multiple nodes of the first type receive the at least part of the determined channel state information and analyze the received at least part of the channel state information.

11. A computer program product comprising instructions which, when the program is executed by a processor, cause the processor to carry out the method according to any one of the preceding claims.

12. A system comprising a wireless network, the wireless network comprising:
at least one node of a first type (310) arranged for performing analysis of channel state information related to wireless signals transmitted in the wireless network, and
a plurality of nodes of a second type (320,330), different from the first type, wherein each of the plurality of nodes of the second type are arranged for:
transmitting one or more wireless signals between the plurality of nodes of the second type;
determining, by at least one node of the plurality of nodes of the second type, channel state information, related to the one or more wireless signals transmitted between the plurality of nodes of the second type; and
transmitting one or more further wireless signals, by the at least one node of the plurality of nodes of the second type to a node of the at least one node of the first type, comprising at least part of the determined channel state information related to the one or more wireless signals transmitted between the plurality of nodes of the second type; wherein each of the at least one node of a first type are further arranged for:
receiving the one or more further wireless signals comprising the at least part of the determined channel state information related to the one or more wireless signals transmitted between the plurality of nodes of the second type;
determining further channel state information related to the one or more further wireless signals transmitted between the at least one node of the plurality of nodes of the second type to the node of the at least one node of the first type and
analyzing both the received at least part of the channel state information related to the one or more wireless signals transmitted between the plurality of nodes of the second type and the further channel state information, and
determining based on said analysis a sensing value.

## Patentansprüche

1. Verfahren zum Durchführen eines Abtastens in einem drahtlosen Netzwerk, das drahtlose Netzwerk umfassend mindestens einen Knoten einer ersten Art (310), der zum Durchführen einer Analyse von Kanalzustandsinformationen in Bezug auf drahtlose Signale angeordnet ist, die in dem drahtlosen Netzwerk übertragen werden, das drahtlose Netzwerk ferner umfassend eine Vielzahl von Knoten einer zweiten Art (320, 330), die sich von der ersten Art unterscheidet, das Verfahren umfassend:
Übertragen eines oder mehrerer drahtloser Signale zwischen der Vielzahl von Knoten der zweiten Art;
Bestimmen, durch mindestens einen Knoten der Vielzahl von Knoten der zweiten Art, von Kanalzustandsinformationen in Bezug auf das eine oder die mehreren drahtlosen Signale, die zwischen der Vielzahl von Knoten der zweiten Art übertragen werden;
Übertragen eines oder mehrerer weiterer drahtloser Signale durch den mindestens einen Knoten der Vielzahl von Knoten der zweiten Art an einen Knoten des mindestens einen Knotens der ersten Art, umfassend mindestens einen Teil der bestimmten Kanalzustandsinformationen in Bezug auf das eine oder die mehreren drahtlosen Signale, die zwischen der Vielzahl von Knoten der zweiten Art übertragen werden;
Empfangen des einen oder der mehreren weiteren drahtlosen Signale durch den Knoten des mindestens einen Knotens der ersten Art, umfassend mindestens den Teil der bestimmten Kanalzustandsinformationen in Bezug auf das eine oder die mehreren drahtlosen Signale, die zwischen der Vielzahl von Knoten der zweiten Art übertragen werden;
Bestimmen, durch den Knoten des mindestens einen Knotens der ersten Art, weiterer Kanalzustandsinformationen in Bezug auf das eine oder die mehreren weiteren drahtlosen Signale, die zwischen dem mindestens einen Knoten der Vielzahl von Knoten der zweiten Art an den Knoten des mindestens einen Knotens der ersten Art übertragen werden;
Analysieren, durch den Knoten des mindestens einen Knotens der ersten Art, sowohl von:
- dem empfangenen mindestens einen Teil der Kanalzustandsinformationen in Bezug auf das eine oder die mehreren drahtlosen Signale, die zwischen der Vielzahl von Knoten der zweiten Art übertragen werden, als auch
- den bestimmten weiteren Kanalzustandsinformationen in Bezug auf das eine oder die mehreren weiteren drahtlosen Signale, die zwischen dem mindestens einen Knoten der Vielzahl von Knoten der zweiten Art an den Knoten des mindestens einen Knotens der ersten Art übertragen werden;
und Bestimmen eines Abtastwerts basierend auf der Analyse.

2. Verfahren nach einem der vorstehenden Ansprüche, wobei der Abtastwert eine Bewegung eines Objekts in einer Abtastzone anzeigt, wobei die Abtastzone durch mindestens die Position mehrerer der Vielzahl von Knoten der zweiten Art definiert ist.

3. Verfahren nach einem der vorstehenden Ansprüche, wobei das Bestimmen von Kanalzustandsinformationen in Bezug auf das eine oder die mehreren drahtlosen Signale durch den mindestens einen Knoten der Vielzahl von Knoten der zweiten Art ein Extrahieren mehrerer Zeitreihenwerte aus einem Kommunikationsstapel des mindestens einen Knotens der Vielzahl von Knoten der zweiten Art umfasst.

4. Verfahren nach Anspruch 3, wobei das Bestimmen von Kanalzustandsinformationen in Bezug auf das eine oder die mehreren drahtlosen Signale durch den mindestens einen Knoten der Vielzahl von Knoten der zweiten Art ferner das Auswählen einer Frequenz oder Periodizität umfasst, mit der die Kanalzustandsinformationen extrahiert werden.

5. Verfahren nach Anspruch 3 oder 4, wobei das Bestimmen von Kanalzustandsinformationen in Bezug auf das eine oder die mehreren drahtlosen Signale durch den mindestens einen Knoten der Vielzahl von Knoten der zweiten Art ferner das Auswählen mindestens des Teils der zu übertragenden Kanalzustandsinformationen aus den bestimmten Kanalzustandsinformationen umfasst.

6. Verfahren nach Anspruch 5, wobei das Auswählen mindestens des Teils der zu übertragenden Kanalzustandsinformationen aus den bestimmten Kanalzustandsinformationen basierend auf mindestens einem durchgeführt wird von: einem Zustand des drahtlosen Netzwerks, dem zu bestimmenden Abtastwert und der Menge der Kanalzustandsinformationen, die extrahiert werden.

7. Verfahren nach einem der vorstehenden Ansprüche, wobei die Analyse mindestens des empfangenen Teils der Kanalzustandsinformationen, die durch den Knoten des mindestens einen Knotens der ersten Art durchgeführt wird, sich von der Analyse der weiteren Kanalzustandsinformationen unterscheidet, die durch den Knoten des mindestens einen Knotens der ersten Art durchgeführt wird.

8. Verfahren nach einem der vorstehenden Ansprüche, wobei der Knoten des mindestens einen Knotens der ersten Art steuert, welcher mindestens eine Knoten der Vielzahl von Knoten der zweiten Art Kanalzustandsinformationen in Bezug auf das drahtlose Signal bestimmt.

9. Verfahren nach einem der vorstehenden Ansprüche, wobei der Knoten des mindestens einen Knotens der ersten Art eine Eigenschaft des Übertragens von mindestens einem Teil der bestimmten Kanalzustandsinformationen durch den mindestens einen Knoten der Vielzahl von Knoten der zweiten Art an den Knoten des mindestens einen Knotens der ersten Art steuert.

10. Verfahren nach Anspruch 1, wobei das drahtlose Netzwerk mehrere Knoten der ersten Art umfasst, und wobei das Verfahren ferner umfasst:
Auswählen eines oder mehrerer der mehreren Knoten der ersten Art, an die mindestens der Teil der bestimmten Kanalzustandsinformationen übertragen wird, derart, dass der ausgewählte oder die ausgewählten mehreren Knoten der ersten Art mindestens den Teil der bestimmten Kanalzustandsinformationen empfangen und mindestens den empfangenen Teil der Kanalzustandsinformationen analysieren.

11. Computerprogrammprodukt, umfassend Anweisungen, die, wenn das Programm durch einen Prozessor ausgeführt wird, den Computer veranlassen, die Schritte des Verfahrens nach einem der vorstehenden Ansprüche vorzunehmen.

12. System, umfassend ein drahtloses Netzwerk, das drahtlose Netzwerk umfassend:
mindestens einen Knoten einer ersten Art (310), der zum Durchführen der Analyse von Kanalzustandsinformationen in Bezug auf die drahtlosen Signale angeordnet ist, die in dem drahtlosen Netzwerk übertragen werden, und
eine Vielzahl von Knoten einer zweiten Art (320, 330), die sich von der ersten Art unterscheidet, wobei jeder der Vielzahl von Knoten der zweiten Art angeordnet ist zum:
Übertragen eines oder mehrerer drahtloser Signale zwischen der Vielzahl von Knoten der zweiten Art;
Bestimmen, durch mindestens einen Knoten der Vielzahl von Knoten der zweiten Art, von Kanalzustandsinformationen in Bezug auf das eine oder die mehreren drahtlosen Signale, die zwischen der Vielzahl von Knoten der zweiten Art übertragen werden; und
Übertragen eines oder mehrerer weiterer drahtloser Signale durch den mindestens einen Knoten der Vielzahl von Knoten der zweiten Art an einen Knoten des mindestens einen Knotens der ersten Art, umfassend mindestens einen Teil der bestimmten Kanalzustandsinformationen in Bezug auf das eine oder die mehreren drahtlosen Signale, die zwischen der Vielzahl von Knoten der zweiten Art übertragen werden;
wobei jeder des mindestens einen Knotens einer ersten Art ferner angeordnet ist zum:
Empfangen des einen oder der mehreren weiteren drahtlosen Signale, umfassend mindestens den Teil der bestimmten Kanalzustandsinformationen in Bezug auf das eine oder die mehreren drahtlosen Signale, die zwischen der Vielzahl von Knoten der zweiten Art übertragen werden;
Bestimmen weiterer Kanalzustandsinformationen in Bezug auf das eine oder die mehreren weiteren drahtlosen Signale, die zwischen dem mindestens einen Knoten der Vielzahl von Knoten der zweiten Art und dem Knoten des mindestens einen Knotens der ersten Art übertragen werden, und
Analysieren sowohl mindestens des empfangenen Teils der Kanalzustandsinformationen in Bezug auf das eine oder die mehreren drahtlosen Signale, die zwischen der Vielzahl von Knoten der zweiten Art übertragen werden, als auch der weiteren Kanalzustandsinformationen, und
Bestimmen eines Abtastwerts basierend auf dieser Analyse.

## Revendications

1. Procédé permettant d'effectuer une détection dans un réseau sans fil, le réseau sans fil comprenant au moins un noeud d'un premier type (310) conçu pour effectuer une analyse d'informations d'état de canal liées à des signaux sans fil transmis dans le réseau sans fil, le réseau sans fil comprenant en outre une pluralité de noeuds d'un second type (320,330), différent du premier type, le procédé comprenant :
la transmission d'un ou plusieurs signaux sans fil entre la pluralité de noeuds du second type ;
la détermination, par au moins un noeud de la pluralité de noeuds du second type, d'informations d'état de canal, liées au signal ou aux signaux sans fil transmis entre la pluralité de noeuds du second type ;
la transmission d'un ou plusieurs autres signaux sans fil, par l'au moins un noeud de la pluralité de noeuds du second type à un noeud de l'au moins un noeud du premier type, comprenant au moins une partie des informations d'état de canal déterminées liées au signal ou aux signaux sans fil transmis entre la pluralité de noeuds du second type ;
la réception du ou des autres signaux sans fil, par le noeud de l'au moins un noeud du premier type, comprenant l'au moins une partie des informations d'état de canal déterminées liées au signal ou aux signaux sans fil transmis entre la pluralité de noeuds du second type ;
la détermination, par le noeud de l'au moins un noeud du premier type, d'autres informations d'état de canal, liées à l'autre signal ou aux autres signaux sans fil transmis entre l'au moins un noeud de la pluralité de noeuds du second type au noeud de l'au moins un noeud du premier type ;
l'analyse, par le noeud de l'au moins un noeud du premier type, à la fois de :
- l'au moins une partie reçue des informations d'état de canal liées au signal ou aux signaux sans fil transmis entre la pluralité de noeuds du second type et,
- des autres informations d'état de canal déterminées liées à l'autre signal ou aux autres signaux sans fil transmis entre l'au moins un noeud de la pluralité de noeuds du second type au noeud de l'au moins un noeud du premier type ;
et la détermination d'une valeur de détection sur la base de ladite analyse.

2. Procédé selon l'une quelconque des revendications précédentes, dans lequel la valeur de détection indique le mouvement d'un objet dans une zone de détection, ladite zone de détection étant définie par au moins la position de plusieurs de la pluralité de noeuds du second type.

3. Procédé selon l'une quelconque des revendications précédentes, dans lequel la détermination des informations d'état de canal, liées au signal ou aux signaux sans fil, par l'au moins un noeud de la pluralité de noeuds du second type comprend l'extraction de multiples valeurs de séries chronologiques à partir d'une pile de communication de l'au moins un noeud de la pluralité de noeuds du second type.

4. Procédé selon la revendication 3, dans lequel la détermination d'informations d'état de canal, liées au signal ou aux signaux sans fil, par l'au moins un noeud de la pluralité de noeuds du second type comprend en outre la sélection d'une fréquence ou d'une périodicité à laquelle les informations d'état de canal sont extraites.

5. Procédé selon la revendication 3 ou 4, dans lequel la détermination d'informations d'état de canal, liées audit signal ou auxdits signaux sans fil, par l'au moins un noeud de la pluralité de noeuds du second type comprend en outre la sélection de l'au moins une partie des informations d'état de canal à transmettre à partir des informations d'état de canal déterminées.

6. Procédé selon la revendication 5, dans lequel la sélection de l'au moins une partie des informations d'état de canal à transmettre à partir des informations d'état de canal déterminées est effectuée sur la base d'au moins l'un parmi : un état du réseau sans fil, la valeur de détection à déterminer, et la quantité des informations d'état de canal qui sont extraites.

7. Procédé selon l'une quelconque des revendications précédentes, dans lequel l'analyse de l'au moins une partie reçue des informations d'état de canal effectuée par le noeud de l'au moins un noeud du premier type est différente de l'analyse des autres informations d'état de canal effectuée par le noeud de l'au moins un noeud du premier type.

8. Procédé selon l'une quelconque des revendications précédentes, dans lequel le noeud de l'au moins un noeud du premier type commande lequel au moins un noeud de la pluralité de noeuds du second type détermine des informations d'état de canal liées audit signal sans fil.

9. Procédé selon l'une quelconque des revendications précédentes, dans lequel le noeud de l'au moins un noeud du premier type commande une caractéristique de la transmission d'au moins une partie des informations d'état de canal déterminées par l'au moins un noeud de la pluralité de noeuds du second type au noeud de l'au moins un noeud du premier type.

10. Procédé selon la revendication 1, dans lequel le réseau sans fil comprend de multiples noeuds du premier type, et dans lequel le procédé comprend en outre :
la sélection d'un ou plusieurs des multiples noeuds du premier type auxquels l'au moins une partie des informations d'état de canal déterminées est transmise, de telle sorte que le ou les noeuds sélectionnés parmi les multiples noeuds du premier type reçoivent l'au moins une partie des informations d'état de canal déterminées et analysent l'au moins une partie reçue des informations d'état de canal.

11. Produit-programme d'ordinateur comprenant des instructions qui, lorsque le programme est exécuté par un processeur, amènent le processeur à exécuter le procédé selon l'une quelconque des revendications précédentes.

12. Système comprenant un réseau sans fil, le réseau sans fil comprenant :
au moins un noeud d'un premier type (310) conçu pour effectuer une analyse d'informations d'état de canal liées à des signaux sans fil transmis dans le réseau sans fil, et
une pluralité de noeuds d'un second type (320, 330), différent du premier type, dans lequel chacun de la pluralité de noeuds du second type est conçu pour :
transmettre un ou plusieurs signaux sans fil entre la pluralité de noeuds du second type ;
déterminer, par au moins un noeud de la pluralité de noeuds du second type, des informations d'état de canal, liées au signal ou aux signaux sans fil transmis entre la pluralité de noeuds du second type ; et
transmettre un ou plusieurs autres signaux sans fil, par l'au moins un noeud de la pluralité de noeuds du second type à un noeud de l'au moins un noeud du premier type, comprenant au moins une partie des informations d'état de canal déterminées liées au signal ou aux signaux sans fil transmis entre la pluralité de noeuds du second type ;
dans lequel chacun de l'au moins un noeud d'un premier type est en outre conçu pour :
recevoir le ou les autres signaux sans fil comprenant l'au moins une partie des informations d'état de canal déterminées liées au signal ou aux signaux sans fil transmis entre la pluralité de noeuds du second type ;
déterminer d'autres informations d'état de canal liées à l'autre signal ou aux autres signaux sans fil transmis entre l'au moins un noeud de la pluralité de noeuds du second type au noeud de l'au moins un noeud du premier type et
analyser à la fois l'au moins une partie reçue des informations d'état de canal liées au signal ou aux signaux sans fil transmis entre la pluralité de noeuds du second type et les autres informations d'état de canal, et
déterminer, sur la base de ladite analyse, une valeur de détection.
